# EUROPEAN PATENT APPLICATION

(11) **EP 4 215 829 A1**
(43) Date of publication of application: **26.07.2023**
(21) Application number: 20954086.3
(22) Date of filing: 16.09.2020
(51) Int. Cl.: F24F 7/007, F24F 11/77, F24F 110/10, F24F 110/12, F24F 120/10

(54) **CONTROL DEVICE, VENTILATION SYSTEM, AIR CONDITIONER DEVICE, VENTILATION CONTROL METHOD, AND PROGRAM**

(71) Applicant: MITSUBISHI ELECTRIC CORPORATION, Chiyoda-ku Tokyo 100-8310 (JP)
(72) Inventor: TAKEDA, Emi, Tokyo 100-8310 (JP)
(74) Representative: Studio Torta S.p.A.
(86) International application number: PCT/JP2020/035109
(87) International publication number: WO 2022/059100

(57) **Abstract**

A control device (2) includes a ventilation controller (202). The ventilation controller (202) controls a ventilator (3) that ventilates a building to operate at a first ventilation amount when no heating operation is performed by an air-conditioning apparatus (4) that performs air conditioning of the building. The ventilation controller (202) controls the ventilator (3) to operate at a second ventilation amount when a heating operation is performed by the air-conditioning apparatus (4). The second ventilation amount is less than the first ventilation amount.

## Description

### Technical Field

The present disclosure relates to a control device, a ventilation system, an air-conditioning apparatus, a ventilation control method, and a program.

### Background Art

Chemical substances such as formaldehyde or volatile organic compounds (VOC) from, for example, housing materials or furniture are known to damage the health of residents. To lower the concentration of such chemical substances, the amended Building Standards Act enforced on July 1, 2003 prescribes installation of equipment that allows 24-hour ventilation in newly-built, added, or rebuilt houses, or more specifically, mechanical ventilation equipment having an effective ventilation amount that can ensure a ventilation frequency greater than or equal to 0.5 times/h.

Ventilation frequency indicates the number of times the air in all the rooms in a house is replaced per hour. For example, the ventilation frequency of 0.5 times/h indicates that the volume of air corresponding to 50% of the capacity (floor area × ceiling height) of all the rooms is replaced per hour.

As an example ventilation technique conforming to the above act, Patent Literature 1 describes a home equipment control device that operates, at predetermined intervals, ventilation means for ventilating a room independently of detection results from detection means for detecting the state of the air in the room.

### Citation List

### Patent Literature

Patent Literature 1: Unexamined Japanese Patent Application Publication No. 2005-337647

### Summary of Invention

### Technical Problem

Ventilation is roughly classified into two types including ventilation using mechanical ventilation equipment such as a ventilation fan or an air conditioner (so-called mechanical ventilation) and ventilation without using mechanical ventilation equipment, or specifically, ventilation with natural airflow through an air inlet and outlet or a gap such as a window or a door (so-called natural ventilation). The ventilation amount in natural ventilation typically increases as the difference between the room temperature and the outside temperature increases.

Therefore, in a known method of controlling the mechanical ventilation equipment to constantly perform ventilation at a fixed ventilation amount without reflecting the ventilation amount in natural ventilation, when the difference between the room temperature and the outside temperature increases during heating or other operations, there is a problem in that the air conditioning may be less effective due to the increase of the ventilation amount in natural ventilation, thus reducing comfort.

In response to the above issue, an objective of the present disclosure is to provide a control device and the like capable of ensuring a prescribed ventilation frequency without decreased comfort in a building during air conditioning.

### Solution to Problem

To achieve the above objective, a control device according to an aspect of the present disclosure is a control device for controlling ventilation means for ventilating a building. The control device includes ventilation control means for controlling the ventilation means to (i) operate at a first ventilation amount when no heating operation is performed by air-conditioning means for performing air conditioning of the building and (ii) operate at a second ventilation amount when a heating operation is performed by the air-conditioning means. The second ventilation amount is less than the first ventilation amount.

### Advantageous Effects of Invention

According to the present disclosure, a prescribed ventilation frequency can be ensured without decreased comfort in a building during air conditioning.

### Brief Description of Drawings

FIG. 1 is a drawing illustrating an entire configuration of a ventilation system according to Embodiment 1;
FIG. 2 is a block diagram illustrating a hardware configuration of a control device according to Embodiment 1;
FIG. 3 is a drawing for explaining an overview of an air-conditioning apparatus according to Embodiment 1;
FIG. 4 is a block diagram illustrating a hardware configuration of the air-conditioning apparatus according to Embodiment 1;
FIG. 5 is a block diagram illustrating a hardware configuration of an operation terminal in Embodiment 1;
FIG. 6 is a drawing for explaining settings performed by a user through the operation terminal in Embodiment 1;
FIG. 7 is a block diagram illustrating functional configurations of the control device and the operation terminal according to Embodiment 1;
FIG. 8 is a drawing illustrating the relationship between natural ventilation frequency and the temperature difference between room temperature and outside temperature;
FIG. 9 is a drawing illustrating the relationship between the operation mode of the air-conditioning apparatus and the ventilation frequency of a ventilator in Embodiment 1;
FIG. 10 is a drawing illustrating a display example of a notification screen in Embodiment 1;
FIG. 11 is a flowchart illustrating procedures of a ventilation control process according to Embodiment 1;
FIG. 12 is a drawing illustrating a display example of a notification screen in Modification 1 of Embodiment 1;
FIG. 13 is a drawing illustrating a display example of a notification screen in Modification 2 of Embodiment 1;
FIG. 14 is a flowchart illustrating procedures of a ventilation control process according to Embodiment 2;
FIG. 15 is a drawing illustrating a display example of a notification screen in Embodiment 2;
FIG. 16 is a drawing illustrating the relationship between a required ventilation amount and the count of occupants in Embodiment 3;
FIG. 17 is a drawing illustrating a display example of a notification screen in Embodiment 3;
FIG. 18 is a block diagram illustrating functional configurations of a control device and an operation terminal in Embodiment 4;
FIG. 19 is a drawing illustrating a display example of a notification screen in Embodiment 4;
FIG. 20 is a drawing illustrating an entire configuration of a ventilation system according to Embodiment 5;
FIG. 21 is a block diagram illustrating a hardware configuration of a server in Embodiment 5; and
FIG. 22 is a block diagram illustrating functional configurations of the server and an operation terminal in Embodiment 5.

### Description of Embodiments

Embodiments of the present disclosure are described below in detail with reference to the drawings.

### Embodiment 1

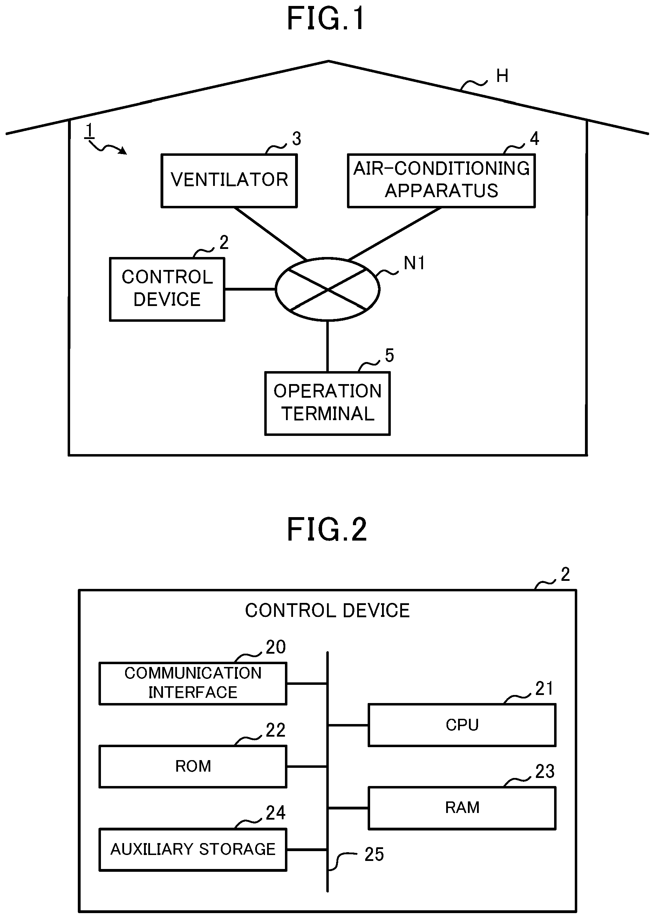

FIG. 1 is a drawing illustrating an entire configuration of a ventilation system 1 according to Embodiment 1 of the present disclosure. The ventilation system 1 ventilates a house H for 24 hours, and includes a control device 2, a ventilator 3, an air-conditioning apparatus 4, and an operation terminal 5.

### Control Device 2

The control device 2 is an example of a control device in an aspect of the present disclosure. The control device 2 is installed at an appropriate position in the house H. The control device 2 is communicatively connected to the ventilator 3, the air-conditioning apparatus 4, and the operation terminal 5 through a home network N1 such as a local area network (LAN) in the house H. The control device 2 controls the operation of the ventilator 3 based on the operation state of the air-conditioning apparatus 4.

As illustrated in FIG. 2, the control device 2 includes a communication interface 20, a central processing unit (CPU) 21, a read-only memory (ROM) 22, a random-access memory (RAM) 23, and an auxiliary storage 24. These components are connected to each other with a bus 25.

The communication interface 20 is a piece of hardware to communicate with the ventilator 3, the air-conditioning apparatus 4, and the operation terminal 5 through the home network N1. The CPU 21 centrally controls the control device 2. The functions of the control device 2 implemented by the CPU 21 are described later in detail. The ROM 22 stores multiple pieces of firmware and data used to execute these pieces of firmware. The RAM 23 is used as a work area for the CPU 21.

The auxiliary storage 24 includes, for example, a readable and writable non-volatile semiconductor memory or a hard disk drive (HDD). Examples of a readable and writable non-volatile semiconductor memory include an electrically erasable programmable ROM (EEPROM) and a flash memory. The auxiliary storage 24 stores various programs including a program (hereafter referred to as a 24-hour ventilation program) for performing 24-hour ventilation of the house H and data used for executing these programs.

The 24-hour ventilation program and an update program for updating the 24-hour ventilation program are downloadable onto the control device 2 from a server that is installed and operated by a supplier, a corporation associated with the supplier, or the like of the ventilation system 1. The 24-hour ventilation program and the update program can be distributed by storage in a non-transitory computer-readable recording medium, such as a compact disc read only memory (CD-ROM), a digital versatile disc (DVD), a magneto-optical disc, a universal serial bus (USB) memory, a memory card, an HDD and a solid state drive (SSD).

### Ventilator 3

Referring back to FIG. 1, the ventilator 3 is an example of ventilation means in an aspect of the present disclosure. The ventilator 3 ventilates the house H with a third-type ventilation method. Although not illustrated, the ventilator 3 is a ventilation fan including a control circuit, a propeller fan, a motor, a motor driving circuit, a shutter, and a dedicated remote controller. The ventilator 3 is installed on, for example, the wall or the ceiling of a bathroom. The ventilator 3 also includes a communication interface for communicating with the control device 2 through the home network N1. The ventilator 3 may be configured to connect to the home network N1 with an external communication adapter to communicate with the control device 2.

The ventilator 3 has an effective ventilation amount that can ensure the ventilation frequency greater than or equal to 0.5 times/h. For example, when the house H has a floor area of 80 m² and a ceiling height of 2.4 m, the ventilator 3 has an effective ventilation amount greater than or equal to 96 (= 80 × 2.4 × 0.5) m³/h. The operation of the ventilator 3 is controlled by the control device 2. More specifically, the control device 2 starts or stops the operation of the ventilator 3 or changes the ventilation amount with a control command. Additionally, a user can directly operate the dedicated remote controller for the ventilator 3 to cause the ventilator 3 to start and stop the operation and to change the ventilation amount.

### Air-conditioning Apparatus 4

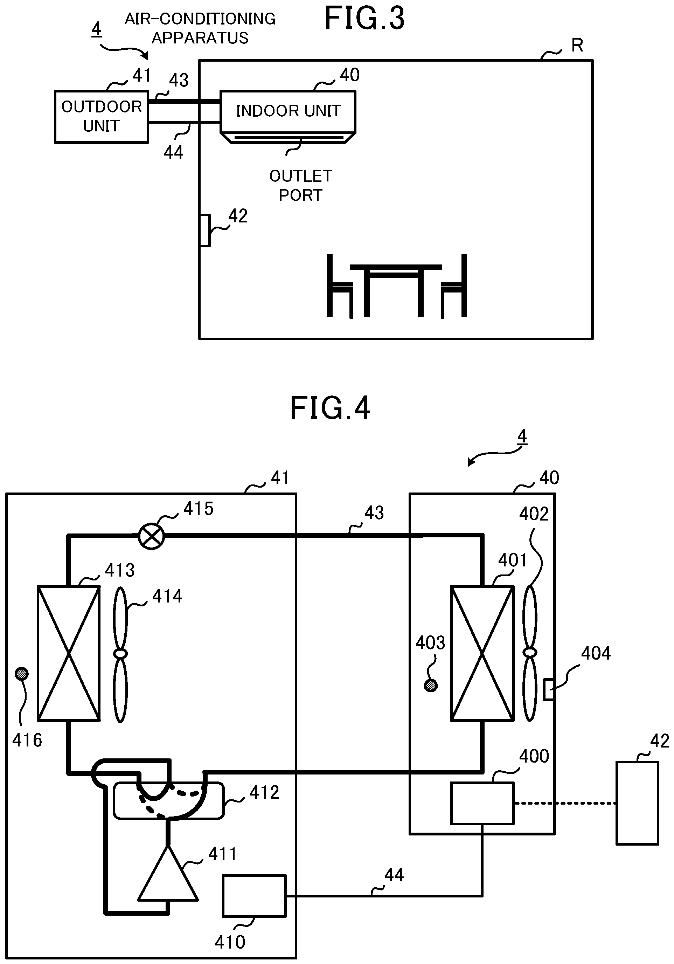

The air-conditioning apparatus 4 is an example of air-conditioning means in an aspect of the present disclosure. The air-conditioning apparatus 4 is a heat pump air-conditioning apparatus using, a hydrofluorocarbon (HFC) such as R32 or a natural refrigerant such as CO₂ as a refrigerant, and is a household air conditioner for performing air conditioning of rooms in the house H. The air-conditioning apparatus 4 is equipped with a vapor compression refrigeration cycle, and operates with power received from, for example, a commercial power source, power generation facility, or power storage facility (not illustrated). As illustrated in FIG. 3, the air-conditioning apparatus 4 includes an indoor unit 40 installed in a room R such as a living-dining kitchen (LDK), an outdoor unit 41 installed outdoor, and a remote controller 42. The indoor unit 40 and the outdoor unit 41 are connected to each other with a refrigerant pipe 43 for circulating a refrigerant, and a communication line 44.

As illustrated in FIG. 4, the indoor unit 40 includes a control circuit 400, a heat exchanger 401, a fan 402, a thermal sensor 403, and a thermal image sensor 404. The control circuit 400 centrally controls the air-conditioning apparatus 4. Although not illustrated, the control circuit 400 includes a CPU, a ROM, a RAM, a first communication interface, a second communication interface, a third communication interface, and an auxiliary storage.

The first communication interface is a piece of hardware to communicate with the outdoor unit 41 through the communication line 44. The second communication interface is a piece of hardware to perform wired or wireless communications with the remote controller 42. The third communication interface is a piece of hardware to communicate with the control device 2 through the home network N1. The indoor unit 40 may be configured to connect to the home network N1 with an external communication adapter to communicate with the control device 2.

The auxiliary storage includes a readable and writable non-volatile semiconductor memory to store programs for centrally controlling the operation of the air-conditioning apparatus 4 and data used to execute the programs. Examples of the readable and writable non-volatile semiconductor memory include an EEPROM and a flash memory.

The heat exchanger 401 performs heat exchange between inside air (that is, the air in the room R) drawn by the fan 402 and the refrigerant from the outdoor unit 41. The heat exchanger 401 functions as an evaporator during the cooling operation and as a condenser during the heating operation.

The fan 402 is, for example, a propeller fan. The fan 402 draws inside air through an inlet port (not illustrated) of the indoor unit 40 and discharges air resulting from the heat exchange performed by the heat exchanger 401 into the room through an outlet port (see FIG. 3). The rotational speed of the fan 402, that is, a blowing volume of the fan 402, is adjusted in accordance with an instruction from the control circuit 400.

The thermal sensor 403 is a sensor such as a thermistor, a thermocouple, or a resistance bulb. The thermal sensor 403 measures the temperature of the air (that is, room temperature) drawn by the fan 402 and outputs a signal indicating the measured room temperature to the control circuit 400.

The thermal image sensor 404 is an infrared thermography device. The thermal image sensor 404 acquires indoor thermal image data and outputs the acquired thermal image data to the control circuit 400. The control circuit 400 analyzes the thermal image data acquired by the thermal image sensor 404 to acquire the position and the surface temperature of a subject such as a floor, a wall, a window, furniture, or an occupant.

The outdoor unit 41 includes a control circuit 410, a compressor 411, a four-way valve 412, a heat exchanger 413, a fan 414, an expansion valve 415, and a thermal sensor 416. The compressor 411, the four-way valve 412, the heat exchanger 413, and the expansion valve 415 in the outdoor unit 41 and the heat exchanger 401 in the indoor unit 40 are annularly connected together with the refrigerant pipe 43. As a result, the refrigeration cycle is formed.

The control circuit 410 controls each component of the outdoor unit 41 in accordance with an instruction from the indoor unit 40. Although not illustrated, the control circuit 410 includes a CPU, a ROM, a RAM, a communication interface allowing communications with the indoor unit 40 (more specifically, the control circuit 400) through the communication line 44, and an auxiliary storage.

The auxiliary storage includes a readable and writable non-volatile semiconductor memory, and stores programs for controlling the operation of the outdoor unit 41 and data used to execute the programs. Examples of the readable and writable non-volatile semiconductor memory include an EEPROM and a flash memory.

The compressor 411 compresses a refrigerant. More specifically, the compressor 411 compresses a low-temperature low-pressure refrigerant, and ejects the resulting high-pressure high-temperature refrigerant to the four-way valve 412. The compressor 411 includes an inverter circuit that can change the operating capacity in accordance with a drive frequency. The operating capacity is an amount by which the compressor 411 feeds a refrigerant per unit. The compressor 411 changes the operating capacity in accordance with an instruction from the control circuit 410.

The four-way valve 412 is used to switch the circulation direction of the refrigerant. In the heating operation, the four-way valve 412 is switched as indicated by the solid line in FIG. 4. Thus, the refrigerant circulates through the compressor 411, the four-way valve 412, the heat exchanger 401, the expansion valve 415, and the heat exchanger 413 in this order. In the cooling operation, the four-way valve 412 is switched as indicated with the dashed line in FIG. 4. Thus, the refrigerant circulates through the compressor 411, the four-way valve 412, the heat exchanger 413, the expansion valve 415, and the heat exchanger 401 in this order.

The heat exchanger 413 performs heat exchange between the outside air drawn by the fan 414 and the refrigerant. The heat exchanger 413 functions as a condenser during cooling operation and as an evaporator during heating operation. The fan 414 is, for example, a propeller fan. The fan 414 draws outside air and discharges air resulting from the heat exchange performed by the heat exchanger 413 outside.

The expansion valve 415 is installed between the heat exchanger 413 and the heat exchanger 401. The expansion valve 415 decompresses and expands the refrigerant flowing through the refrigerant pipe 43. The expansion valve 415 is, for example, an electronic expansion valve that can adjust the degree of the throttle opening with a stepping motor (not illustrated). The expansion valve 415 changes the degree of the opening in accordance with an instruction from the control circuit 410 to adjust the pressure of the refrigerant.

The thermal sensor 416 is, for example, a thermistor, a thermocouple, or a resistance bulb. The thermal sensor 416 measures the temperature of outside air (that is, outside temperature) drawn by the fan 414 and outputs a signal indicating the measured outside temperature to the control circuit 410.

The remote controller 42 is installed embedded in a wall of the room R or, alternately, is installed in a mode hung on the wall. The remote controller 42 is a remote controller for receiving, from a user in the room R, operations pertaining to air conditioning. The remote controller 42 is connected to the control circuit 400 in the indoor unit 40 for wired or wireless communications. Through the operation on the remote controller 42, the user can cause the air-conditioning apparatus 4 to start and stop one operation or a combination of two or more operations and to change, for example, the set temperature, air velocity, or airflow direction.

Examples of the varieties of operations of the air-conditioning apparatus 4 (so-called operation modes) include a cooling operation, a heating operation, a blowing operation, a dehumidification operation, a humidification operation, an air-cleaning operation, a hot-air operation, an intense operation, and a maintenance operation. The maintenance operation is performed to evaporate, by heating the heat exchanger 401, waterdrops attached to the heat exchanger 401 in the indoor unit 40 during, for example, the cooling or dehumidification operation.

### Operation Terminal 5

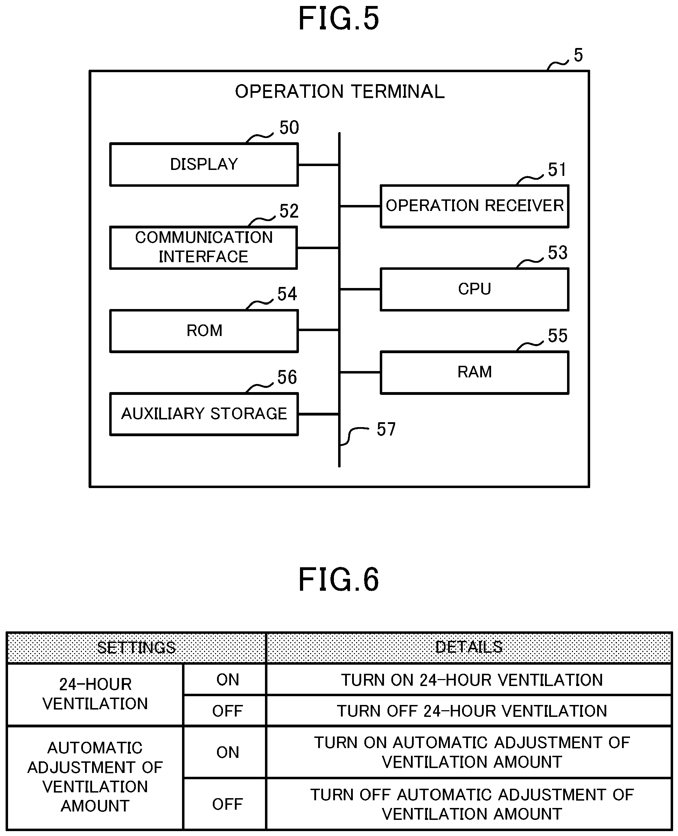

The operation terminal 5 is an electronic device serving as an interface between the ventilation system 1 and a user. For example, the operation terminal 5 is, for example, a smart device such as a smartphone or a tablet device, a personal computer (PC), or a television. As illustrated in FIG. 5, the operation terminal 5 includes a display 50, an operation receiver 51, a communication interface 52, a CPU 53, a ROM 54, a RAM 55, and an auxiliary storage 56. These components are connected to each other with a bus 57.

The display 50 includes a display device such as a liquid crystal display or an organic electro luminescence (EL) display. The display 50 displays various screens in accordance with user operations under the control of the CPU 53.

The operation receiver 51 includes one or more input devices including a push button, a touchscreen, and a touchpad. The operation receiver 51 receives an operation input from the user and transmits a signal corresponding to the received operation to the CPU 53.

The communication interface 52 is a piece of hardware to communicate with the control device 2 through the home network N1. The CPU 53 centrally controls the operation terminal 5. The functions of the operation terminal 5 implemented by the CPU 53 are described later in detail. The ROM 54 stores multiple pieces of firmware and data used to execute these pieces of firmware. The RAM 55 is used as a work area for the CPU 53.

The auxiliary storage 56 includes, for example, a readable and writable non-volatile semiconductor memory or an HDD. Examples of a readable and writable non-volatile semiconductor memory include an EEPROM and a flash memory. The auxiliary storage 56 stores various programs including an application program (hereafter referred to as a ventilation application) for operating the ventilator 3 and data used for executing these programs.

The ventilation application and an update program for updating the ventilation application are downloadable onto the operation terminal 5 from a server that is installed and operated by a supplier, a corporation associated with the supplier, or the like of the ventilation system 1, other program distribution server, or the like. The ventilation application and the update program can be distributed by storage in a non-transitory computer-readable recording medium, such as a CD-ROM, a DVD, a magneto-optical disk, a USB memory, a memory card, an HDD, or an SSD.

The user can perform various settings regarding the ventilator 3 for the control device 2 by activating the ventilation application and can confirm notifications from the control device 2 associated with the operation of the ventilator 3. For example, as illustrated in FIG. 6, the user can set whether to turn on 24-hour ventilation and whether to automatically adjust the ventilation amount of the ventilator 3 through a setting screen (not illustrated) displayed on the display 50 in the operation terminal 5. The details of the automatic adjustment of the ventilation amount and the notifications from the control device 2 are described later.

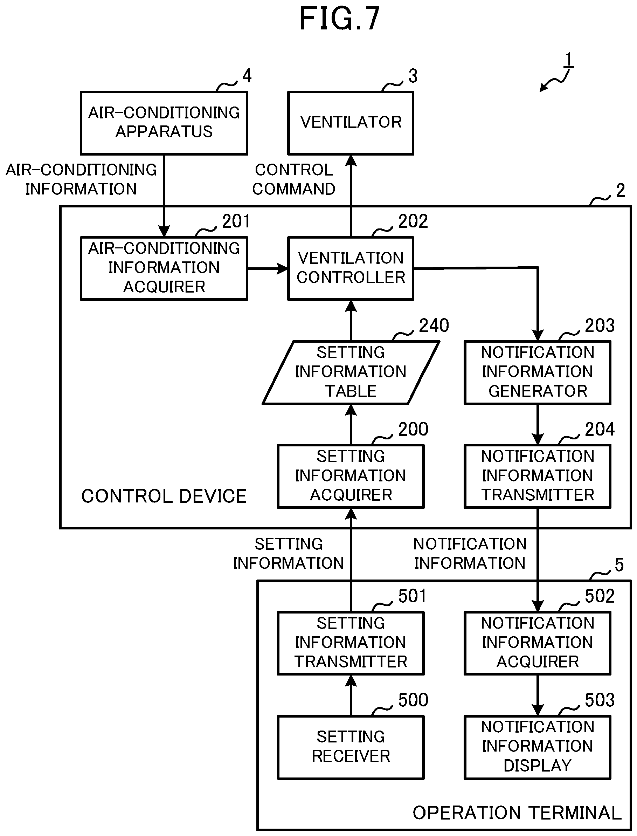

Functional Configurations of Control Device 2 and Operation Terminal 5 FIG. 7 is a block diagram illustrating functional configurations of the control device 2 and the operation terminal 5. As illustrated in FIG. 7, the control device 2 includes a setting information acquirer 200, an air-conditioning information acquirer 201, a ventilation controller 202, a notification information generator 203, and a notification information transmitter 204. These functional components of the control device 2 are implemented by the CPU 21 executing the above 24-hour ventilation program stored in the auxiliary storage 24.

The operation terminal 5 includes a setting receiver 500, a setting information transmitter 501, a notification information acquirer 502, and a notification information display 503. These functional components of the operation terminal 5 are implemented by the CPU 53 executing the above ventilation application stored in the auxiliary storage 56.

In the operation terminal 5, the setting receiver 500 receives a setting on the 24-hour ventilation from the user. As described above, the setting receiver 500 displays the setting screen (not illustrated) to receive a setting as to, for example, whether to turn on the 24-hour ventilation or whether to automatically adjust the ventilation amount of the ventilator 3 from the user (see FIG. 6).

The setting information transmitter 501 transmits information indicating the user setting received by the setting receiver 500 (hereafter referred to as setting information) to the control device 2.

The setting information acquirer 200 in the control device 2 receives and acquires the setting information transmitted from the operation terminal 5. The setting information acquirer 200 stores the acquired setting information into a setting information table 240. The setting information table 240 is a data table stored in the auxiliary storage 24.

The air-conditioning information acquirer 201 periodically acquires air-conditioning information from the air-conditioning apparatus 4. For example, the air-conditioning information acquirer 201 acquires air-conditioning information from the air-conditioning apparatus 4 in one-minute cycles. More specifically, the air-conditioning information acquirer 201 periodically transmits a command (hereafter referred to as an air-conditioning-information request command) requesting air-conditioning information to the air-conditioning apparatus 4. When receiving the air-conditioning-information request command, the air-conditioning apparatus 4 generates air-conditioning information about the current air-conditioning operation and transmits the generated air-conditioning information to the control device 2. The air-conditioning information includes information as to whether the air-conditioning apparatus 4 is in operation, information indicating the operation mode, room temperature data, and outside temperature data. The room temperature data indicates the room temperature measured by the thermal sensor 403 included in the indoor unit 40. The outside temperature data indicates the outside temperature measured by the thermal sensor 416 included in the outdoor unit 41.

After transmitting the air-conditioning-information request command, the air-conditioning information acquirer 201 receives and acquires air-conditioning information transmitted from the air-conditioning apparatus 4. The air-conditioning information acquirer 201 provides the acquired air-conditioning information to the ventilation controller 202.

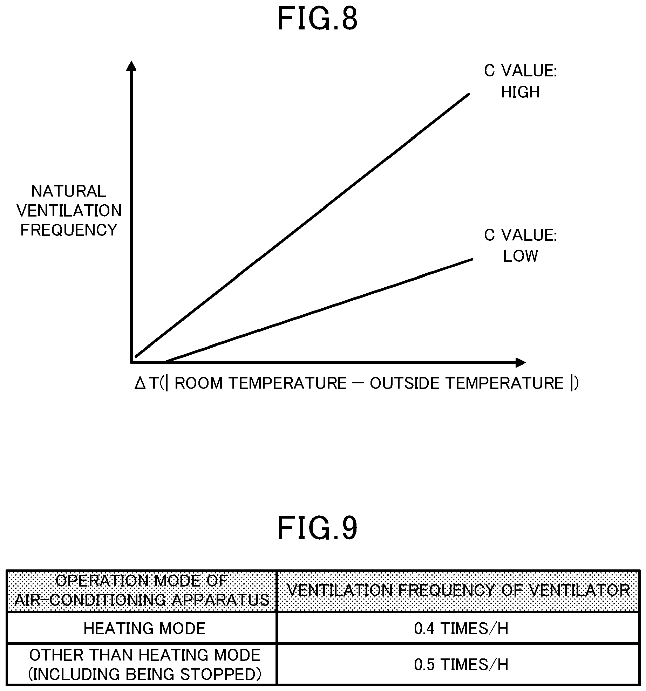

The ventilation controller 202 is an example of ventilation control means in an aspect of the present disclosure. The ventilation controller 202 controls the ventilator 3 by reflecting the ventilation amount in natural ventilation (hereafter referred to as a natural ventilation amount). Natural ventilation is ventilation without using mechanical ventilation equipment (including the ventilator 3 or a range hood not illustrated) installed in the house H, or more specifically, ventilation with natural airflow through an air inlet and outlet or a gap such as a window or a door in the house H. As illustrated in FIG. 8, the ventilation frequency in natural ventilation (hereafter referred to as a natural ventilation frequency) is known to increase as an absolute value of the temperature difference between the room temperature and the outside temperature (hereafter referred to as a temperature difference ΔT) increases. The ventilation frequency in natural ventilation is also known to increase further as a C value increases. The C value is an index of airtightness in a building, or more specifically, the value indicating the proportion of the gap area to the total floor area of the building.

In winter, when the room is heated, the temperature difference ΔT increases further, and thus increases the natural ventilation frequency further than in the other seasons. More specifically, when the C value is less than or equal to 2 cm²/m², the natural ventilation frequency is estimated to be about 0.1 times/h, and when the C value is greater than 2 cm²/m², the natural ventilation frequency is estimated to be about 0.2 times/h.

Based on the above findings, the ventilation system 1 according to the present embodiment of the present disclosure reduces the ventilation amount of the ventilator 3 when the air-conditioning apparatus 4 operates in a heating mode, that is, when the air-conditioning apparatus 4 performs the heating operation. As a result, an increase in an air-conditioning load is suppressed while ensuring the prescribed minimum ventilation frequency in the house H of 0.5 times/h. More specifically, when the air-conditioning apparatus 4 performs the heating operation, the ventilation controller 202 controls the ventilator 3 to operate at a second ventilation amount less than a first ventilation amount. Specifically, when the air-conditioning apparatus 4 starts the heating operation, the ventilation controller 202 generates a control command instructing a change of the ventilation amount to the second ventilation amount and transmits the generated control command to the ventilator 3.

The first ventilation amount is a minimum ventilation amount (hereafter referred to as a required ventilation amount) required in the house H, or in other words, a ventilation amount corresponding to a required ventilation frequency (specifically 0.5 times/h) that is a prescribed minimum ventilation frequency. More specifically, when the house H has a floor area of 80 m² and the ceiling height of 2.4 m, the first ventilation amount (that is, a required ventilation amount) is 96 (= 80 × 2.4 × 0.5) m³/h.

The second ventilation amount is acquired by subtracting the natural ventilation amount from the required ventilation amount (that is, the first ventilation amount), or in other words, a ventilation amount corresponding to the ventilation frequency acquired by subtracting the natural ventilation frequency from the required ventilation frequency. The natural ventilation frequency during heating is estimated to be greater than or equal to 0.1 times/h. In the present embodiment, the natural ventilation frequency during heating is set to 0.1 times/h, and thus the second ventilation amount corresponds to the ventilation frequency of 0.4 times/h (= 0.5 times/h - 0.1 times/h). More specifically, when the house H has a floor area of 80 m² and the ceiling height of 2.4 m, the second ventilation amount is 76.8 (= 80 × 2.4 × 0.4) m³/h.

Data about the prescribed ventilation frequency, the natural ventilation frequency, the floor area, and the ceiling height in the house H is preset by, for example, the user or a contractor through the operation terminal 5 and stored in the auxiliary storage 24 in the control device 2. The contractor refers to a person who undertakes installation of the control device 2, the ventilator 3, or the air-conditioning apparatus 4.

After changing the ventilation amount of the ventilator 3 to the second ventilation amount, when the operation of the air-conditioning apparatus 4 is stopped or switched to an operation mode other than the heating operation, the ventilation controller 202 controls the ventilator 3 to operate at the first ventilation amount. More specifically, the ventilation controller 202 generates a control command instructing a change of the ventilation amount to the first ventilation amount and transmits the generated control command to the ventilator 3. FIG. 9 illustrates the relationship between the operation mode of the air-conditioning apparatus 4 and the ventilation frequency of the ventilator 3.

The ventilation controller 202 performs control to reduce the ventilation amount of the ventilator 3 only when the user has preset the 24-hour ventilation and the automatic adjustment of the ventilation amount to be turned on.

The notification information generator 203 generates, based on the result of the ventilation controller 202 controlling the ventilator 3, a notification information for notifying information about the operation of the ventilator 3 to the user. For example, the notification information generator 203 generates a notification information when the ventilation controller 202 performs control to change the ventilation amount of the ventilator 3.

More specifically, when the ventilation controller 202 performs control to change the ventilation amount of the ventilator 3 to the second ventilation amount, the notification information generator 203 generates a notification information including information indicating, for example, the location of the ventilator 3, the ventilator 3 performing the operation at a reduced ventilation amount, the location of the air-conditioning apparatus 4, the air-conditioning apparatus 4 performing a heating operation, and the start date and time of the heating operation. When the ventilation controller 202 performs control to change the ventilation amount of the ventilator 3 to the first ventilation amount, the notification information generator 203 generates a notification information including information indicating, for example, the location of the ventilator 3 and the ventilator 3 performing the operation at a normal ventilation amount.

The notification information generator 203 provides the generated notification information to the notification information transmitter 204. The notification information transmitter 204 transmits the notification information generated by the notification information generator 203 to the operation terminal 5. The notification information generator 203 and the notification information transmitter 204 are examples of notification means in an aspect of the present disclosure.

The notification information acquirer 502 in the operation terminal 5 receives and acquires a notification information transmitted from the control device 2. The notification information acquirer 502 provides the acquired notification information to the notification information display 503. When the notification information transmitted from the control device 2 indicates the operation at a reduced ventilation amount, the notification information display 503 displays, on the display 50, a screen based on the notification information (hereafter referred to as a notification screen).

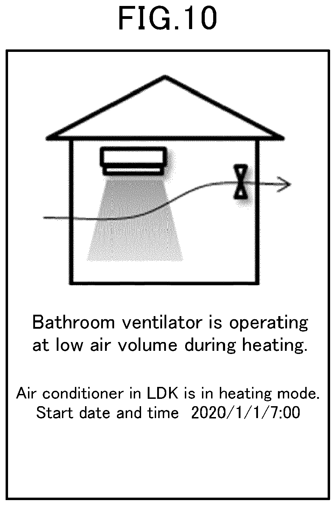

FIG. 10 illustrates an example of the notification screen. The notification screen illustrated in FIG. 10 notify the user that the air-conditioning apparatus 4 installed in the LDK is in the heating operation and the ventilator 3 installed in the bathroom is in the ventilation operation at a low air volume (specifically, at a ventilation amount corresponding to the ventilation frequency of 0.4 times/h). When the notification information transmitted from the control device 2 indicates the operation at a normal ventilation amount, the notification information display 503 deletes the notification screen from the display 50.

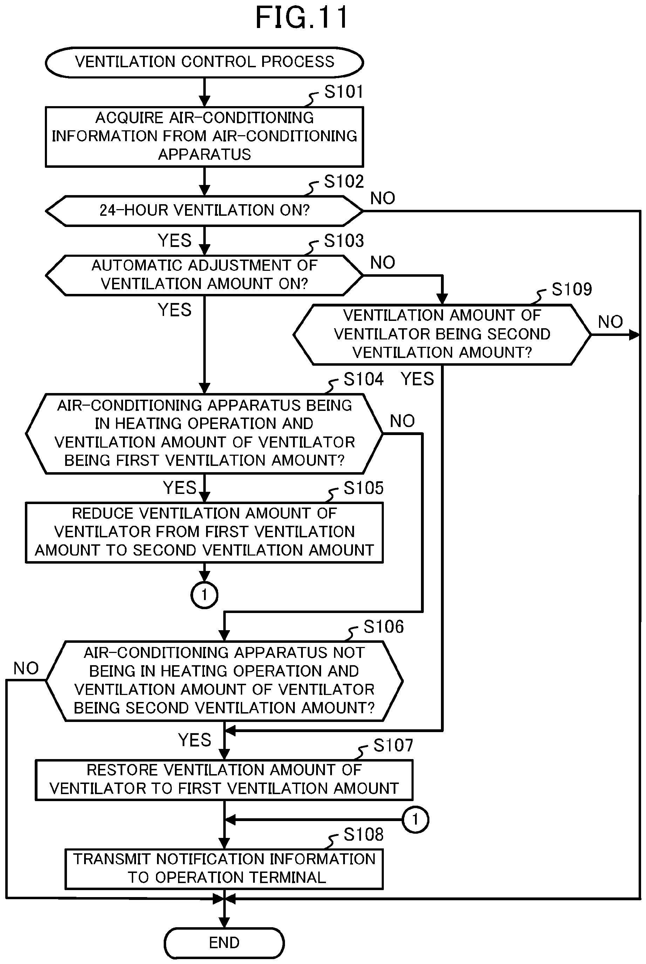

FIG. 11 is a flowchart illustrating procedures of a ventilation control process performed by the control device 2. The control device 2 repeatedly performs the ventilation control process periodically (for example, in one-minute cycles).

The air-conditioning information acquirer 201 acquires air-conditioning information from the air-conditioning apparatus 4 (step S101). As described above, the air-conditioning information includes information as to whether the air-conditioning apparatus 4 is in operation, information indicating the operation mode, room temperature data, and outside temperature data.

The ventilation controller 202 determines, by referring to the setting information table 240, whether the user has set the 24-hour ventilation to be turned on, or in other words, whether the 24-hour ventilation is turned on (step S102). When the 24-hour ventilation is turned on (YES in step S102), the ventilation controller 202 performs the processing in step S103. When the 24-hour ventilation is not turned on (NO in step S102), the control device 2 ends the ventilation control process in this cycle.

In step S103, the ventilation controller 202 determines, by referring to the setting information table 240, whether the user has set to automatically adjust the ventilation amount of the ventilator 3, or in other words, whether the automatic adjustment of the ventilation amount is turned on. When the automatic adjustment of the ventilation amount is turned on (YES in step S103), the ventilation controller 202 performs the processing in step S104. When the automatic adjustment of the ventilation amount is not turned on (NO in step S103), the ventilation controller 202 performs the processing in step S109.

In step S104, the ventilation controller 202 determines whether the air-conditioning apparatus 4 is in the heating operation and the ventilation amount of the ventilator 3 is the first ventilation amount. When the air-conditioning apparatus 4 is in the heating operation and the ventilation amount of the ventilator 3 is the first ventilation amount (YES in step S104), the ventilation controller 202 reduces the ventilation amount of the ventilator 3 from the first ventilation amount to the second ventilation amount (step S105). More specifically, the ventilation controller 202 generates a control command instructing a change of the ventilation amount to the second ventilation amount, and transmits the generated control command to the ventilator 3. The control device 2 then advances the processing to step S108.

For a negative determination in step S104, the ventilation controller 202 determines whether the air-conditioning apparatus 4 is not in the heating operation and the ventilation amount of the ventilator 3 is the second ventilation amount (step S106). When the air-conditioning apparatus 4 is not in the heating operation and the ventilation amount of the ventilator 3 is the second ventilation amount (YES in step S106), the ventilation controller 202 restores the ventilation amount of the ventilator 3 to the first ventilation amount (step S107). More specifically, the ventilation controller 202 generates a control command instructing a change of the ventilation amount to the first ventilation amount, and transmits the generated control command to the ventilator 3. The control device 2 then advances the processing to step S108. For a negative determination in step S106, the control device 2 ends the ventilation control process in this cycle.

In step S108, the notification information generator 203 generates a notification information, and the notification information transmitter 204 transmits the generated notification information to the operation terminal 5. The control device 2 then ends the ventilation control process in this cycle.

In step S109, the ventilation controller 202 determines whether the ventilation amount of the ventilator 3 is the second ventilation amount. When the ventilation amount of the ventilator 3 is the second ventilation amount (YES in step S109), the ventilation controller 202 restores the ventilation amount of the ventilator 3 to the first ventilation amount (step S107). The control device 2 then advances the processing to step S108. When the ventilation amount of the ventilator 3 is not the second ventilation amount (NO in step S109), the control device 2 ends the ventilation control process in this cycle.

As described above, when the air-conditioning apparatus 4 performs the heating operation, the ventilator 3 in the ventilation system 1 according to the present embodiment operates at the second ventilation amount less than the first ventilation amount that is a normal ventilation amount. Thus, the ventilation system 1 can ensure the prescribed ventilation frequency in the house H without decreased comfort in the house H during heating. Additionally, the ventilation amount of the ventilator 3 is reduced, and thus the power consumption of the ventilator 3 can be reduced. Moreover, an increase in the load during heating is suppressed, and thus the power consumption of the air-conditioning apparatus 4 can be reduced.

The control device 2 transmits, to the operation terminal 5, a notification information for notifying information about the operation of the ventilator 3 to the user, and the operation terminal 5 displays a notification screen based on the notification information. As a result, the user can easily confirm the operation state of the ventilator 3.

### Modification 1

In the above embodiment, the ventilation frequency of the ventilator 3 is reduced from 0.5 times/h to 0.4 times/h when the air-conditioning apparatus 4 performs the heating operation, expecting the natural ventilation frequency in winter to be about 0.1 times/h even in a house with a low C value (less than or equal to 2 cm²/m²). However, some houses H may have C values that cause the natural ventilation frequency to be less than 0.1 times/h in winter. Thus, to accurately ensure the prescribed ventilation frequency, the control device 2 may perform control to reduce the ventilation amount of the ventilator 3 in a specific period alone during the heating operation of the air-conditioning apparatus 4.

For example, the control device 2 may perform control to reduce the ventilation amount of the ventilator 3 during a limited period from when the air-conditioning apparatus 4 starts the heating operation to when the room temperature reaches the set temperature. In this case, the air-conditioning apparatus 4 adds information indicating the set temperature to the air-conditioning information periodically transmitted to the control device 2. Immediately after the heating operation is started, the air-conditioning apparatus 4 operates at high heating capability with high power consumption to quickly raise the room temperature to the set temperature. For a great ventilation amount of the house H, the time taken for the room temperature to reach the set temperature is longer, and thus power consumption of the air-conditioning apparatus 4 increases. The ventilation amount of the ventilator 3 is thus reduced during a limited period from when the air-conditioning apparatus 4 starts the heating operation to when the room temperature reaches the set temperature. As a result, the prescribed ventilation frequency can be accurately ensured and an increase in the power consumption of the air-conditioning apparatus 4 can be suppressed.

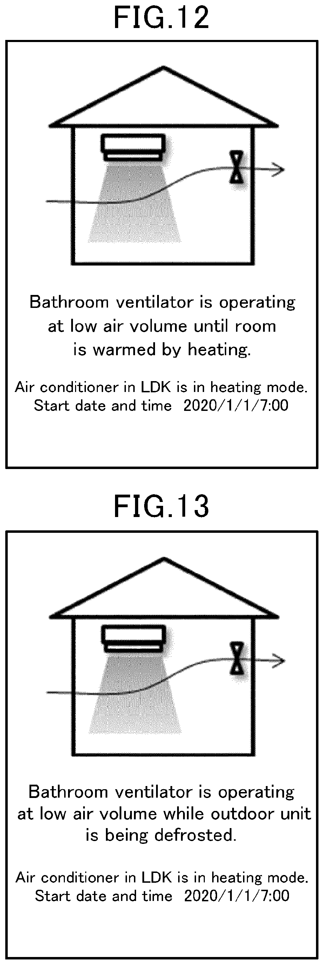

As described above, when control to reduce the ventilation amount of the ventilator 3 is performed during a limited period from when the air-conditioning apparatus 4 starts the heating operation to when the room temperature reaches the set temperature, the notification information generator 203 in the control device 2 generates a notification information including information indicating, for example, the location of the ventilator 3, the ventilator 3 performing the operation at a reduced ventilation amount, the location of the air-conditioning apparatus 4, the air-conditioning apparatus 4 performing the heating operation, the start date and time of the heating operation, and the ventilation amount being reduced until the room is heated. The notification information transmitter 204 transmits the notification information generated by the notification information generator 203 to the operation terminal 5. The operation terminal 5 then displays the notification screen illustrated in FIG. 12 on the display 50.

### Modification 2

From the same perspective as in Modification 1, the control device 2 may perform control to reduce the ventilation amount of the ventilator 3 only when, for example, the air-conditioning apparatus 4 is in a non-temperature-adjustment state during the heating operation. This non-temperature-adjustment state includes a thermo-off state and a defrosting state. The thermo-off state refers to when the compressor 411 in the air-conditioning apparatus 4 is stopped with the room temperature rising over the set temperature during the heating operation. When the room temperature falls below the set temperature during the thermo-off state, the air-conditioning apparatus 4 operates the compressor 411 again (this state is referred to as a thermo-on state). The defrosting state refers when a refrigerant circuit is switched to cooling to melt frost forming on the heat exchanger 413 in the outdoor unit 41 during the heating operation.

During the thermo-off or defrosting state, heating is substantially stopped. The great ventilation amount of the house H may then reduce user comfort. To avoid this, the ventilation amount of the ventilator 3 is reduced only in the non-temperature-adjustment state during the heating operation of the air-conditioning apparatus 4. Thus, the ventilation system 1 can accurately ensure the prescribed ventilation frequency without decreased user comfort.

As described above, when control to reduce the ventilation amount of the ventilator 3 is performed only in the non-temperature-adjustment state during the heating operation of the air-conditioning apparatus 4, the notification information generator 203 in the control device 2 generates a notification information including information indicating, for example, the location of the ventilator 3, the ventilator 3 being operating at a reduced ventilation amount, the location of the air-conditioning apparatus 4, the air-conditioning apparatus 4 performing the heating operation, the start date and time of the heating operation, the ventilation amount being reduced in the non-temperature-adjustment state, and the type of the non-temperature-adjustment state (the thermo-off or defrosting state). The notification information transmitter 204 transmits the notification information generated by the notification information generator 203 to the operation terminal 5. Thus, the operation terminal 5 displays a notification screen illustrated in FIG. 13 on the display 50.

### Modification 3

The ventilation controller 202 in the control device 2 may adjust the ventilation amount of the ventilator 3 by transmitting, to the ventilator 3, a control command instructing a change of the air volume (for example, low and high), or a control command instructing whether to perform an intermittent operation. When instructing the intermittent operation, the ventilation controller 202 may also instruct at least one of an operation interval or an interruption interval to the ventilator 3.

### Modification 4

As in the heating operation, the control device 2 may perform control to reduce the ventilation amount of the ventilator 3 also when the air-conditioning apparatus 4 performs the humidification operation (including a humidifying heating operation). This is because the humidification operation is normally performed in winter and the temperature difference ΔT is thus greater and might increase the natural ventilation frequency.

### Modification 5

The control device 2 may perform control to reduce the ventilation amount of the ventilator 3 when the air-conditioning apparatus 4 performs, for example, the hot-air operation or the intense operation to quickly raise the room temperature to the set temperature.

### Modification 6

The control device 2 may estimate the C value based on the air pressure difference between the inside of the house H and the outside air. When the estimated C value is less than or equal to a predetermined threshold (for example, 2 cm²/m²), the control device 2 may set the natural ventilation frequency during heating to 0.1 times/h. When the estimated C value is greater than the threshold, the control device 2 may set the natural ventilation frequency during heating to 0.2 times/h. In this case, the ventilation system 1 further includes barometers (not illustrated) installed inside and outside the house H. Each barometer includes a communication interface allowing communications with the control device 2 and an air pressure sensor to measure the air pressure. The barometer transmits, to the control device 2, data indicating measurement results in response to a request from the control device 2. In this manner, the ventilation system 1 can improve the accuracy of the natural ventilation frequency and adjust the ventilation amount of the ventilator 3 to a more appropriate value.

### Modification 7

Other than the ventilator 3, one or more ventilators for performing 24-hour ventilation may be installed in the house H and may be configured to be controllable by the control device 2.

### Modification 8

When the notification information transmitted from the control device 2 indicates the operation at the normal ventilation amount, the notification information display 503 in the operation terminal 5 may display a notification screen based on the notification information on the display 50.

### Modification 9

The notification information transmitter 204 may transmit the notification information to the air-conditioning apparatus 4, and the remote controller 42 in the air-conditioning apparatus 4 may display a notification screen based on the received notification information.

### Modification 10

When the CO₂ concentration measured by a CO₂ measuring device (not illustrated) installed in the house H is greater than a predetermined reference value, the control device 2 may adjust the ventilation amount of the ventilator 3 to lower the CO₂ concentration to or below the reference value. In this case, the CO₂ measuring device includes a communication interface allowing communications with the control device 2 and a CO₂ sensor. The CO₂ measuring device transmits data indicating the measured CO₂ concentration periodically (for example, in one-minute cycles) to the control device 2.

### Embodiment 2

Embodiment 2 of the present disclosure is now described. In the following description, components and the like common to those of Embodiment 1 are assigned the same reference numerals and the description thereof is omitted.

In the ventilation system 1 according to the present embodiment, the control device 2 performs control to reduce the ventilation amount of the ventilator 3 when the temperature difference ΔT (specifically, an absolute value of the temperature difference between the room temperature and the outside temperature) is greater than a predetermined threshold independently of whether the air-conditioning apparatus 4 is in the heating operation.

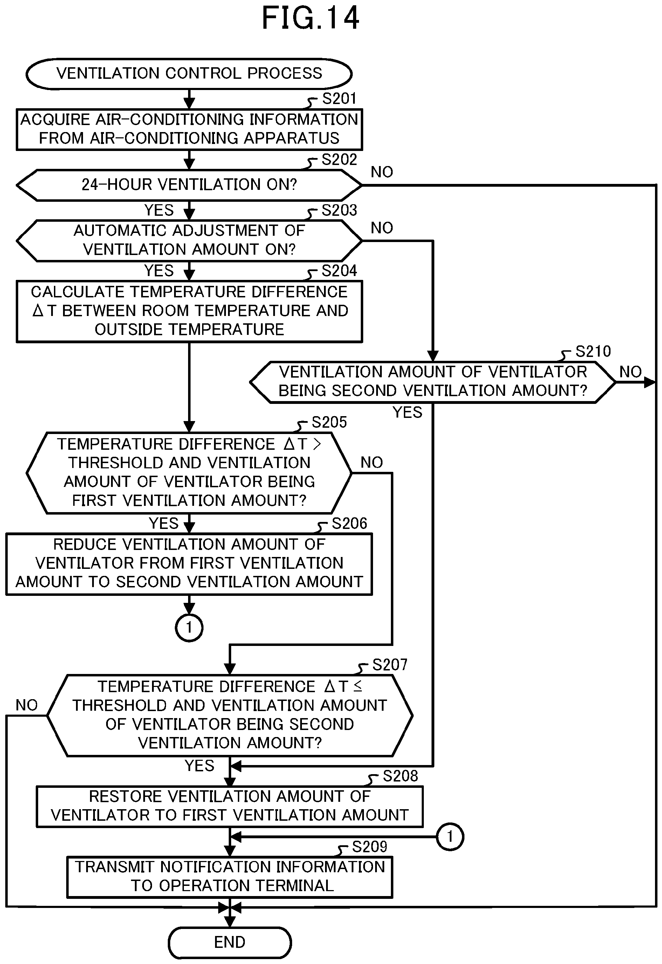

FIG. 14 is a flowchart illustrating procedures of a ventilation control process performed by the control device 2 according to the present embodiment. The control device 2 repeatedly performs the ventilation control process periodically (for example, in one-minute cycles).

The air-conditioning information acquirer 201 acquires air-conditioning information from the air-conditioning apparatus 4 (step S201). The air-conditioning information may include at least room temperature data (specifically, data indicating the room temperature of the room R measured by the thermal sensor 403) and outside temperature data (specifically, data indicating the outside temperature measured by the thermal sensor 416).

The ventilation controller 202 determines, by referring to the setting information table 240, whether the user has set the 24-hour ventilation to be turned on, or in other words, whether the 24-hour ventilation is turned on (step S202). When the 24-hour ventilation is turned on (YES in step S202), the ventilation controller 202 performs the processing in step S203. When the 24-hour ventilation is not turned on (NO in step S202), the control device 2 ends the ventilation control process in this cycle.

In step S203, the ventilation controller 202 determines, by referring to the setting information table 240, whether the user has set the automatic adjustment of the ventilation amount of the ventilator 3 to be turned on, or in other words, whether the automatic adjustment of the ventilation amount is turned on. When the automatic adjustment of the ventilation amount is turned on (YES in step S203), the ventilation controller 202 performs the processing in step S204. When the automatic adjustment of the ventilation amount is not turned on (NO in step S203), the ventilation controller 202 performs the processing in step S210.

In step S204, the ventilation controller 202 calculates the temperature difference ΔT, or more specifically, the absolute value of the temperature difference between the room temperature and the outside temperature based on the room temperature data and the outside temperature data included in the air-conditioning information. The ventilation controller 202 then determines whether the temperature difference ΔT is greater than the threshold and the ventilation amount of the ventilator 3 is the first ventilation amount (step S205). When the temperature difference ΔT is greater than the threshold and the ventilation amount of the ventilator 3 is the first ventilation amount (YES in step S205), the ventilation controller 202 reduces the ventilation amount of the ventilator 3 from the first ventilation amount to the second ventilation amount (step S206). The control device 2 then advances the processing to step S209.

For a negative determination in step S205, the ventilation controller 202 determines whether the temperature difference ΔT is less than or equal to the threshold and the ventilation amount of the ventilator 3 is the second ventilation amount (step S207). When the temperature difference ΔT is less than or equal to the threshold and the ventilation amount of the ventilator 3 is the second ventilation amount (YES in step S207), the ventilation controller 202 restores the ventilation amount of the ventilator 3 to the first ventilation amount (step S208). The control device 2 then advances the processing to step S209. For a negative determination in step S207, the control device 2 ends the ventilation control process in this cycle.

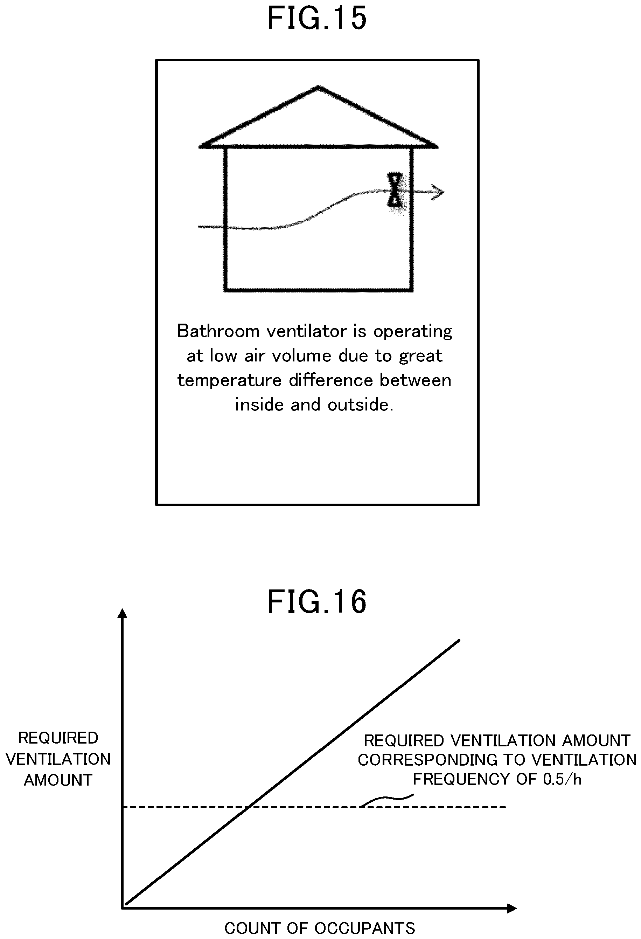

In step S209, the notification information generator 203 generates a notification information, and the notification information transmitter 204 transmits the generated notification information to the operation terminal 5. The notification information includes information indicating, for example, the location of the ventilator 3, the ventilator 3 being operating at a reduced ventilation amount, and the temperature difference between the inside and the outside being large. The operation terminal 5 that has received the notification information displays a notification screen based on the received notification information on the display 50 (see FIG. 15).

In step S210, the ventilation controller 202 determines whether the ventilation amount of the ventilator 3 is the second ventilation amount. When the ventilation amount of the ventilator 3 is the second ventilation amount (YES in step S210), the ventilation controller 202 restores the ventilation amount of the ventilator 3 to the first ventilation amount (step S208). The control device 2 then advances the processing to step S209. When the ventilation amount of the ventilator 3 is not the second ventilation amount (NO in step S210), the control device 2 ends the ventilation control process in this cycle.

As described above, in the ventilation system 1 according to the present embodiment, when the temperature difference ΔT between the room temperature and the outside temperature is large, the ventilator 3 operates at the second ventilation amount less than the first ventilation amount that is a normal ventilation amount. As a result, the prescribed ventilation frequency in the house H can be ensured without decreased comfort during air conditioning. Additionally, the ventilation amount of the ventilator 3 is reduced, and thus the power consumption of the ventilator 3 can be reduced. Moreover, an increase in the load during air conditioning is suppressed, and thus the power consumption of the air-conditioning apparatus 4 can be reduced.

The control device 2 transmits, to the operation terminal 5, a notification information for notifying information about the operation of the ventilator 3 to the user, and the operation terminal 5 displays a notification screen based on the notification information. As a result, the user can easily confirm the operation state of the ventilator 3.

### Modification 1

The control device 2 may use the air temperature measured by a room-temperature measuring device (not illustrated) installed in the house H as a room temperature to calculate the temperature difference ΔT. The room-temperature measuring device includes a communication interface allowing communications with the control device 2 and a thermal sensor to measure the air temperature. The room-temperature measuring device periodically transmits data indicating the measured air temperature to the control device 2. In this case, the air-conditioning information transmitted by the air-conditioning apparatus 4 to the control device 2 may eliminate the room temperature data.

### Modification 2

The control device 2 may use the outside temperature measured by an outside-temperature measuring device (not illustrated) installed outside to calculate the temperature difference ΔT. Similarly to the room-temperature measuring device, the outside-temperature measuring device includes a communication interface allowing communications with the control device 2 and a thermal sensor to measure the outside temperature. The outside-temperature measuring device periodically transmits data indicating the measured outside temperature to the control device 2. In this case, the air-conditioning information transmitted by the air-conditioning apparatus 4 to the control device 2 may eliminate the outside temperature data. For combination of Modifications 1 and 2, the control device 2 may eliminate acquiring the air-conditioning information from the air-conditioning apparatus 4.

### Modification 3

The control device 2 may acquire weather information for the location of the house H through communications with a weather server (not illustrated), and use the outside temperature included in the acquired weather information as the outside temperature to calculate the temperature difference ΔT. In this case, the air-conditioning information transmitted by the air-conditioning apparatus 4 to the control device 2 may eliminate the outside temperature data. For combination of Modifications 1 and 3, the control device 2 may eliminate acquiring the air-conditioning information from the air-conditioning apparatus 4.

### Modification 4

The air-conditioning apparatus typically controls the operation frequency of the compressor in proportion to the temperature difference between the room temperature and the set temperature. Thus, the control device 2 may perform control to reduce the ventilation amount of the ventilator 3 only when the operation frequency of the compressor 411 included in the air-conditioning apparatus 4 is greater than the predetermined threshold. In this case, the air-conditioning information transmitted by the air-conditioning apparatus 4 to the control device 2 may include at least data indicating the operation frequency of the compressor 411.

### Modification 5

The control device 2 may perform control to reduce the ventilation amount of the ventilator 3 in the months in which the temperature difference ΔT is large (for example, January, February, and December). Such months are preset by, for example, the user or the contractor. In this case, the control device 2 is not required to calculate the temperature difference ΔT and thus may eliminate acquiring the air-conditioning information from the air-conditioning apparatus 4.

### Embodiment 3

Embodiment 3 of the present disclosure is now described. In the following description, components and the like common to those of Embodiment 1 are assigned the same reference numerals and the description thereof is omitted.

In Embodiment 1, the required ventilation amount is determined as a ventilation amount corresponding to the required ventilation frequency (0.5 times/h) of the house H. Instead, the required ventilation amount may be calculated by multiplying the minimum ventilation amount required per occupant (hereafter referred to as a ventilation amount per occupant) by the count of occupants. FIG. 16 illustrates the relationship between the required ventilation amount and the count of occupants in the room R during heating. As illustrated in FIG. 16, when the count of occupants is greater than a specific count, the required ventilation amount is greater than the ventilation amount corresponding to the ventilation frequency of 0.5 times/h. For example, for the house H having a floor area of 80 m², the ceiling height of 2.4 m, and a ventilation amount per occupant during heating in the room R of 20 m³/h, when there are five occupants in the room R during heating, the required ventilation amount in proportional to the count of occupants is 100 m³/h. This rate is greater than the ventilation amount corresponding to the ventilation frequency of 0.5 times/h, or more specifically, 96 (= 80 × 2.4 × 0.5) m³/h.

In this situation, it is preferable in regard to comfort to control the ventilator 3 regarding the ventilation amount proportional to the count of occupants as the required ventilation amount. Thus, in the ventilation system 1 according to the present embodiment, the control device 2 further includes an occupant count acquirer (not illustrated) to acquire the count of occupants. When the required ventilation amount proportional to the count of occupants in the room R is greater than the ventilation amount corresponding to the ventilation frequency of 0.5 times/h, the control device 2 controls the ventilator 3 based on the required ventilation amount. More specifically, when the air-conditioning apparatus 4 performs the heating operation, the control device 2 monitors the count of occupants in the room R, and performs control to change, when the count of occupants is greater than or equal to five, the ventilation amount of the ventilator 3 to the ventilation amount per occupant (for example, 20 m³/h) × the count of occupants - the natural ventilation amount (for example, the ventilation amount corresponding to 0.1 times/h). The ventilation amount of the ventilator 3 in this case is hereafter referred to as a third ventilation amount.

The occupant count acquirer is an example of occupant count acquiring means in an aspect of the present disclosure. The occupant count acquirer may acquire the count of occupants in the room R by analyzing the thermal image data acquired by the thermal image sensor 404 included in the air-conditioning apparatus 4. In this case, the air-conditioning apparatus 4 transmits the thermal image data acquired by the thermal image sensor 404 periodically (for example, in one-minute cycles) to the control device 2. Alternatively, the occupant count acquirer may acquire the count of occupants in the room R by receiving data indicating the count of occupants periodically transmitted from the air-conditioning apparatus 4. In this case, the air-conditioning apparatus 4 periodically counts the occupants in the room R based on the thermal image data, and transmits the data indicating the count of occupants, which is a result of the counting, to the control device 2.

Alternatively, the occupant count acquirer may acquire the count of occupants in the room R by analyzing image data of the room R captured by a visible camera (not illustrated) installed in the room R. In this case, the visible camera includes a communication interface allowing communications with the control device 2 and an image sensor such as a charge-coupled device (CCD) or a complementary metal oxide semiconductor (CMOS). The visible camera transmits the captured image data of the room R periodically (for example, in one-minute cycles) to the control device 2.

Alternatively, the occupant count acquirer may acquire the count of occupants in the room R based on the CO₂ concentration measured by a CO₂ measuring device (not illustrated) installed in the room R. In this case, the CO₂ measuring device includes a communication interface allowing communications with the control device 2 and a CO₂ sensor. The CO₂ measuring device transmits data indicating the measured CO₂ concentration periodically (for example, in one-minute cycles) to the control device 2.

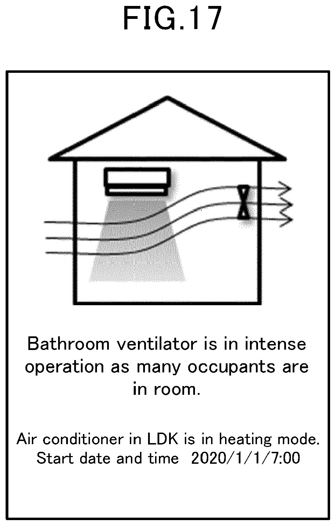

When performing control to increase the ventilation amount of the ventilator 3 to the third ventilation amount, the control device 2 generates a notification information for notifying the performance of control to the user and transmits the notification information to the operation terminal 5. In this case, the notification information includes information indicating, for example, the location of the ventilator 3, the ventilator 3 being operating at an increased ventilation amount, the location of the air-conditioning apparatus 4, the air-conditioning apparatus 4 performing the heating operation, the start date and time of the heating operation, and the greater count of occupants. The operation terminal 5 that has received the notification information displays the notification screen illustrated in FIG. 17 on the display 50.

As described above, the ventilation system 1 according to the present embodiment produces the same effects as the ventilation system 1 according to Embodiment 1, and has no decreased comfort in the room R for a greater count of occupants in the room R during heating.

### Modification 1

In the ventilation system 1, when the control device 2 is configured to be capable of controlling ventilators other than the ventilator 3 (for example, ventilation fans installed in a bedroom or a toilet) and the required ventilation amount proportional to the count of occupants in the room R is greater than the ventilation amount corresponding to the ventilation frequency of 0.5 times/h, the control device 2 may cause the ventilators other than the ventilator 3 to perform ventilation in addition to the ventilator 3. As a result, the ventilation system 1 can deal with a case where the third ventilation amount is greater than the effective ventilation amount of the ventilator 3.

### Modification 2

In Modification 1, when multiple ventilators including the ventilator 3 operate, the power consumption increases accordingly. Thus, when the control device 2 can control a range hood, the control device 2 may operate the range hood alone to ensure the required ventilation amount proportional to the count of occupants in the room R. Typically, even when the range hood is operated at the low air volume, a ventilation amount reaches about 250 m³/h, and thus excessive ventilation might occur. Thus, the control device 2 may control the range hood to operate for a predetermined time period alone (for example, for ten minutes) or to intermittently operate to avoid excessive ventilation.

### Embodiment 4

Embodiment 4 of the present disclosure is now described. In the following description, components and the like common to those of Embodiment 1 are assigned the same reference numerals and the description thereof is omitted.

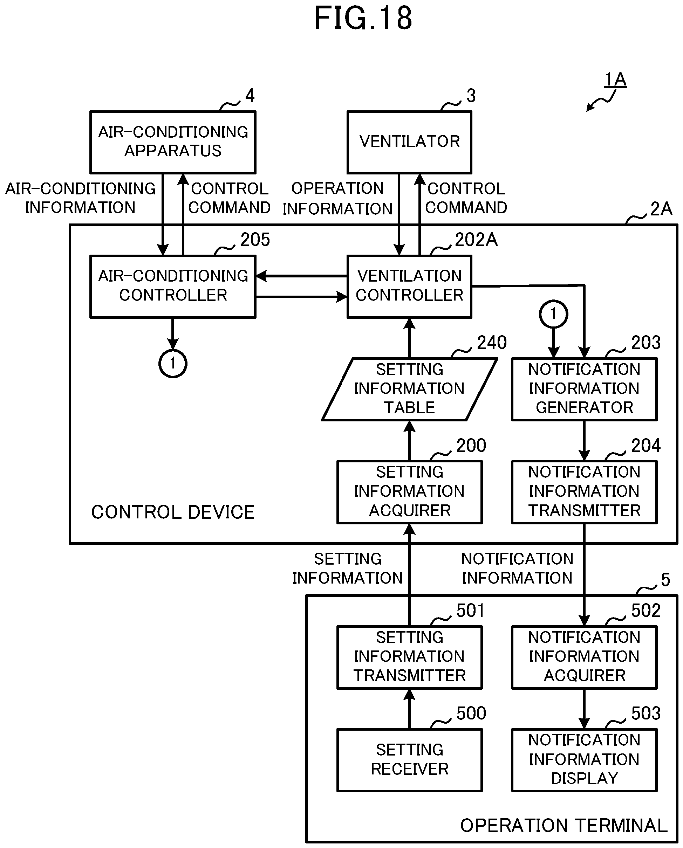

As illustrated in FIG. 18, a ventilation system 1A according to the present embodiment includes a control device 2A, a ventilator 3, an air-conditioning apparatus 4, and an operation terminal 5.

The control device 2A is an example of a control device in an aspect of the present disclosure. Similarly to the control device 2 according to Embodiment 1, the control device 2A is installed at an appropriate location in the house H. The control device 2A is connected to the ventilator 3, the air-conditioning apparatus 4, and the operation terminal 5 for communications through the home network N1 in the house H to control the operation of the ventilator 3 based on the operation state of the air-conditioning apparatus 4. When the ventilator 3 is in operation, the control device 2A also performs to control to enhance heating of the air-conditioning apparatus 4 so as not to decrease comfort of the user. The control device 2A has the same hardware configuration as the control device 2 according to Embodiment 1 (see FIG. 2).

As illustrated in FIG. 18, the control device 2A differs from the control device 2 according to Embodiment 1 in including a ventilation controller 202A instead of the ventilation controller 202, and an air-conditioning controller 205 instead of the air-conditioning information acquirer 201. The ventilation controller 202A is an example of ventilation control means in an aspect of the present disclosure. Similarly to the ventilation controller 202 in Embodiment 1, the ventilation controller 202A controls the ventilator 3 by reflecting the natural ventilation amount. Additionally, the ventilation controller 202A acquires, periodically (for example, in one-minute cycles) from the ventilator 3, operation information about the current operation of the ventilator 3.

More specifically, the ventilation controller 202A periodically transmits a command requesting transmission of the operation information (hereafter referred to as an operation-information request command) to the ventilator 3. When receiving the operation-information request command, the ventilator 3 generates operation information including information indicating information as to whether the ventilator 3 is in operation and the air volume (for example, low or high), and transmits the generated operation information to the control device 2A.

After transmitting the operation-information request command, the ventilation controller 202A receives the operation information transmitted from the ventilator 3 and provides the received operation information to the air-conditioning controller 205. The air-conditioning controller 205 is an example of air-conditioning control means in an aspect of the present disclosure. The air-conditioning controller 205 controls the air-conditioning apparatus 4 based on the operation information from the ventilation controller 202A. More specifically, the air-conditioning controller 205 performs control to raise the set temperature of the air-conditioning apparatus 4 for heating in accordance with the air volume of the ventilator 3. For example, the air-conditioning controller 205 transmits, to the air-conditioning apparatus 4, a control command to raise the set temperature of the air-conditioning apparatus 4 by 0.5 °C when the air volume of the ventilator 3 is set to the low, and transmits, to the air-conditioning apparatus 4, a control command to raise the set temperature of the air-conditioning apparatus 4 by 1 °C when the air volume of the ventilator 3 is set to the high.

As in Embodiment 1, when the user has preset the 24-hour ventilation and the automatic adjustment of the ventilation amount to be turned on, the ventilation amount of the ventilator 3 is reduced to the second ventilation amount during the heating operation of the air-conditioning apparatus 4, and the air volume thereof is less than usual (for example, low) without entering the high. However, when the user has not set the automatic adjustment of the ventilation amount to be turned on, the air volume may enter the high, as described above, during the heating operation of the air-conditioning apparatus 4.

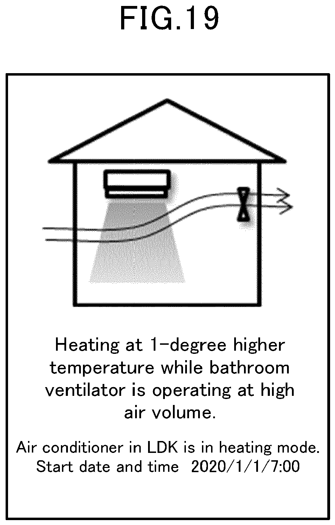

When the set temperature of the air-conditioning apparatus 4 for heating is changed, the notification information generator 203 generates a notification information including information indicating, for example, the location of the ventilator 3, the air volume of the ventilator 3, the location of the air-conditioning apparatus 4, the air-conditioning apparatus 4 performing the heating operation, the start date and time of the heating operation, and the increased value of the set temperature. The notification information transmitter 204 transmits the notification information generated by the notification information generator 203 to the operation terminal 5. Thus, the operation terminal 5 displays the notification screen illustrated in FIG. 19 on the display 50.

As described above, the ventilation system 1A according to the present embodiment produces the same effects as the ventilation system 1 according to Embodiment 1, and more effectively avoids decreased comfort during heating by adjusting the set temperature of the air-conditioning apparatus 4 in accordance with the air volume of the ventilator 3.

### Modification

In a heating operation performed by the air-conditioning apparatus 4 during a ventilation operation performed by the ventilator 3, when there is an occupant in a locally-cooled place in the house H (for example, near an air inlet not illustrated or near the window), the control device 2A may control the air-conditioning apparatus 4 in order that the sensible temperature of the occupant is identical to the set temperature. In this case, the control device 2A acquires the location of the occupant based on the thermal image data acquired by the thermal image sensor 404 included in the air-conditioning apparatus 4. Alternately, the control device 2A may acquire the location of the occupant based on the image data of the room captured by a visible camera (not illustrated) installed in the house H. The visible camera includes a communication interface allowing communications with the control device 2A and an image sensor such as a CCD or a CMOS. The visible camera transmits the captured image data of the room periodically (for example, in one-minute cycles) to the control device 2A.

The control device 2A can acquire the sensible temperature by subtracting a value estimated based on the outside temperature from the room temperature.

### Embodiment 5

Embodiment 5 of the present disclosure is now described. In the following description, components and the like common to those of Embodiment 1 are assigned the same reference numerals and the description thereof is omitted.

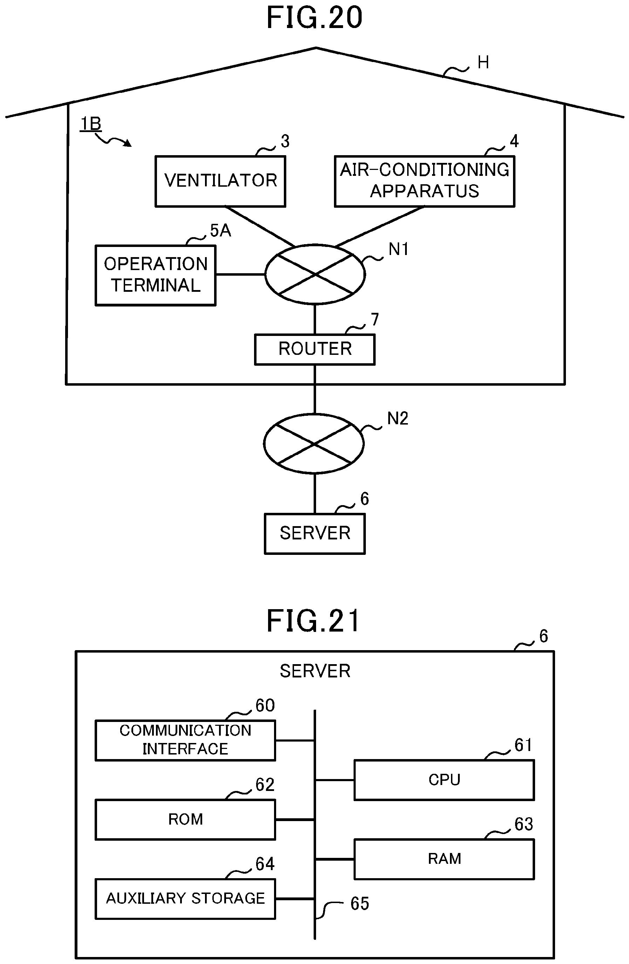

FIG. 20 is a drawing illustrating an entire configuration of a ventilation system 1B according to Embodiment 5 of the present disclosure. The ventilation system 1B includes a ventilator 3, an air-conditioning apparatus 4, an operation terminal 5A, and a server 6.

### Operation Terminal 5A

The operation terminal 5A is an electronic device serving as an interface between the ventilation system 1B and a user. For example, the operation terminal 5A is a smart device such as a smartphone or a tablet device, a PC, or a television. The operation terminal 5A has the same hardware configuration as the operation terminal 5 in Embodiment 1 (see FIG. 5). The functions of the operation terminal 5A are described later in detail.

### Server 6

The server 6 is an example of a control device in an aspect of the present disclosure. The server 6 is a server computer installed and operated by, for example, a manufacturer or a seller of the ventilator 3 or the air-conditioning apparatus 4, and is a so-called cloud server. As illustrated in FIG. 21, the server 6 includes a communication interface 60, a CPU 61, a ROM 62, a RAM 63, and an auxiliary storage 64. These components are connected to each other with a bus 65.

The communication interface 60 is a piece of hardware to communicate with another device through a wide area network N2 such as the Internet. The CPU 61 centrally controls the server 6. The functions of the server 6 implemented by the CPU 61 are described later in detail. The ROM 62 stores multiple pieces of firmware and data used to execute these pieces of firmware. The RAM 63 is used as a work area for the CPU 61.

The auxiliary storage 64 includes, for example, a readable and writable non-volatile semiconductor memory or an HDD. Examples of the readable and writable non-volatile semiconductor memory include an EEPROM and a flash memory. The auxiliary storage 64 stores various programs including a program for providing a 24-hour ventilation service (hereafter referred to as a ventilation service program) and data used to execute these programs.

The ventilation service program and an update program for updating the ventilation service program are downloadable onto the server 6 from another server. The ventilation service program and the update program can be distributed by storage in a non-transitory computer-readable recording medium, such as a CD-ROM, a DVD, a magneto-optical disk, a USB memory, a memory card, an HDD, or an SSD.

### Functional Configurations of Server 6 and Operation Terminal 5A

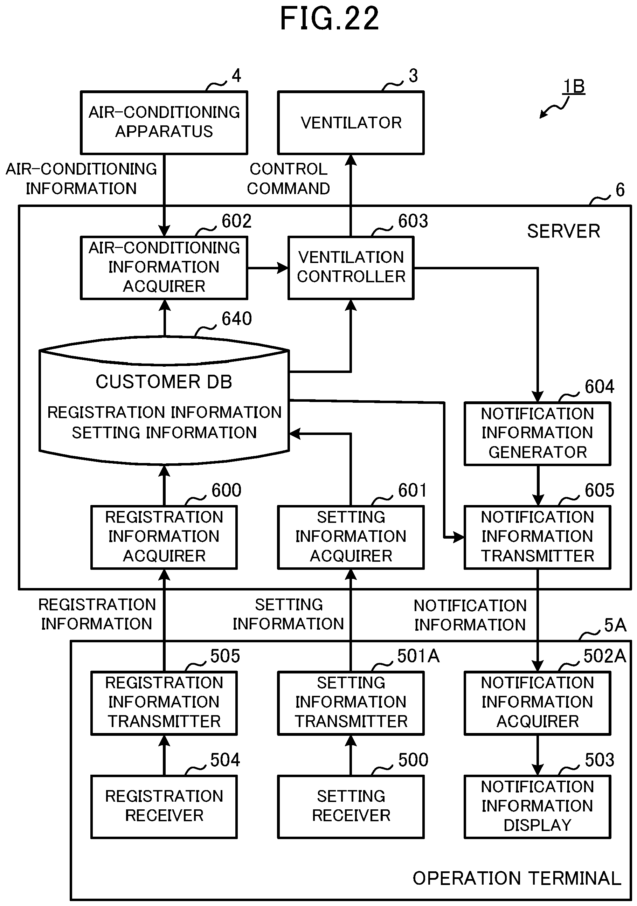

FIG. 22 is a block diagram illustrating functional configurations of the server 6 and the operation terminal 5A. As illustrated in FIG. 22, the server 6 includes a registration information acquirer 600, a setting information acquirer 601, an air-conditioning information acquirer 602, a ventilation controller 603, a notification information generator 604, and a notification information transmitter 605. These functional components of the server 6 are implemented by the CPU 61 executing the ventilation service program stored in the auxiliary storage 64.

The operation terminal 5A includes a setting receiver 500, a setting information transmitter 501A, a notification information acquirer 502A, a notification information display 503, a registration receiver 504, and a registration information transmitter 505. These functional components of the operation terminal 5A are implemented by the CPU 53 executing a ventilation application that is an application program for the operation of the ventilator 3 and stored in the auxiliary storage 56.

In the operation terminal 5A, the registration receiver 504 receives, from the user, an input of information used to perform user registration in the server 6. More specifically, the registration receiver 504 displays a user registration screen (not illustrated), and the user inputs information such as a user identification (ID) or a password through the user registration screen. When displaying the user registration screen, the registration receiver 504 acquires product information about the ventilator 3 from the control circuit of the ventilator 3 with communications through a router 7 being a wireless LAN router such as Wi-Fi (registered trademark) installed in the house H. The product information includes, for example, a manufacturer's serial number, a model name, or a model number. Similarly, when displaying the user registration screen, the registration receiver 504 acquires product information about the air-conditioning apparatus 4 from the control circuit 400 in the indoor unit 40 with communications through the router 7.

The registration information transmitter 505 transmits the registration information including, for example, (i) the user ID and the password input by the user, and (ii) product information acquired from each of the ventilator 3 and the air-conditioning apparatus 4, to the server 6 through the router 7.

The registration information acquirer 600 in the server 6 receives and acquires registration information transmitted from the operation terminal 5A. The registration information acquirer 600 stores the acquired registration information (including the user ID, the password, and product information about each of the ventilator 3 and the air-conditioning apparatus 4) into a customer database (DB) 640. The customer DB 640 manages information about customers, that is, purchasers of the ventilator 3 and the air-conditioning apparatus 4 and users that have performed user registration. The customer DB 640 is stored in the auxiliary storage 64.

The setting information transmitter 501A in the operation terminal 5A transmits the setting information indicating user settings received at the setting receiver 500 to the server 6 through the router 7. The setting information acquirer 601 in the server 6 receives and acquires setting information transmitted from the operation terminal 5A. The setting information acquirer 601 stores the acquired setting information into the customer DB 640.

The air-conditioning information acquirer 602 in the server 6 periodically acquires air-conditioning information from the air-conditioning apparatus 4 in a house of each customer that is the house H. For example, the air-conditioning information acquirer 602 acquires air-conditioning information from the air-conditioning apparatus 4 in one-minute cycles. More specifically, the air-conditioning information acquirer 602 periodically transmits a command requesting air-conditioning information (hereafter referred to as an air-conditioning-information request command) to the air-conditioning apparatus 4. When receiving the air-conditioning-information request command through the router 7, the air-conditioning apparatus 4 generates air-conditioning information about the current air-conditioning operation and transmits the generated air-conditioning information to the server 6 through the router 7. The air-conditioning information includes information as to whether the air-conditioning apparatus 4 is in operation, information indicating the operation mode, the room temperature data, and the outside temperature data. The room temperature data indicates the room temperature measured by the thermal sensor 403 included in the indoor unit 40. The outside temperature data indicates the outside temperature measured by the thermal sensor 416 included in the outdoor unit 41.

After transmitting the air-conditioning-information request command, the air-conditioning information acquirer 602 receives and acquires the air-conditioning information transmitted from the air-conditioning apparatus 4. The air-conditioning information acquirer 602 provides the acquired air-conditioning information to the ventilation controller 603.

The ventilation controller 603 is an example of ventilation control means in an aspect of the present disclosure. The ventilation controller 603 controls the ventilator 3 by reflecting the natural ventilation amount. The ventilation controller 603 performs control in the same manner as the ventilation controller 202 in the control device 2 according to Embodiment 1.

The notification information generator 604 generates, based on the result of controlling the ventilator 3 by the ventilation controller 603, a notification information for notifying information about the operation of the ventilator 3 to the user. The details of the notification information are the same as those in Embodiment 1. The notification information transmitter 605 transmits the notification information generated by the notification information generator 604 to the operation terminal 5A of the customer. The notification information generator 604 and the notification information transmitter 605 are examples of notification means in an aspect of the present disclosure.

The notification information acquirer 502A in the operation terminal 5A receives and acquires the notification information transmitted from the server 6 through the router 7. The notification information acquirer 502A provides the acquired notification information to the notification information display 503. When the notification information transmitted from the server 6 indicates the operation at a reduced ventilation amount, the notification information display 503 displays the notification screen based on the notification information on the display 50 (see FIG. 10). When the notification information transmitted from the server 6 indicates the operation at the normal ventilation amount, the notification information display 503 deletes the notification screen from the display 50.

As described above, in the ventilation system 1B according to the present embodiment, when the air-conditioning apparatus 4 performs the heating operation, the ventilator 3 operates at the second ventilation amount less than the first ventilation amount that is the normal ventilation amount. Thus, the ventilation system 1B can ensure the prescribed ventilation frequency of the house H without decreased comfort in the house H during heating. Additionally, the ventilation amount of the ventilator 3 is reduced, and thus the power consumption of the ventilator 3 can be reduced. Moreover, an increase in the load during heating is suppressed, and thus the power consumption of the air-conditioning apparatus 4 can be reduced.

The server 6 transmits, to the operation terminal 5A, the notification information for notifying information about the operation of the ventilator 3 to the user, and the operation terminal 5A displays a notification screen based on the notification information. As a result, the user can easily confirm the operation state of the ventilator 3.

The server 6 controls the ventilator 3 at the house of each customer.
Thus, the customer may eliminate a dedicated controller from the house. The 24-hour ventilation service can thus be offered to the customer at a low cost.

### Modification

A configuration is possible in which the communications between the ventilator 3 and the server 6 are performed based on a low power wide area (LPWA) in the fifth-generation mobile communications system (5G). Similarly, a configuration is possible in which communications between the air-conditioning apparatus 4 and the server 6 or between the operation terminal 5A and the server 6 are performed based on LPWA in 5G.

### Other Modifications

Each modification of Embodiment 1 is applicable to the present embodiment.

The present disclosure is not limited to each of the above embodiments and the modifications of the embodiments, and of course, various changes are possible without departing from the gist of the present disclosure.

For example, the ventilator in one or more embodiments of the present disclosure is not limited to a ventilator for the third-type ventilation method involving only exhaustion, but may be a ventilator for a first-type ventilation method involving air supply and exhaustion or for a second-type ventilation method involving only air supply. For the first-type ventilation method, the ventilator in one or more embodiments of the present disclosure may also have a function (so-called total heat exchange) of exchanging sensible heat and latent heat between outside air to be drawn and inside air to be discharged.

The air-conditioning apparatus in one or more embodiments of the present disclosure may be configured to include one outdoor unit and multiple indoor units, may be an air-conditioning apparatus enabling a whole-house air conditioning system, or may be, for example, a floor heating system or a radiant cooling and heating system. As in Modification 4 of Embodiment 1, when control to reduce the ventilation amount of the ventilator 3 is performed during the humidification operation, the air-conditioning apparatus in one or more embodiments of the present disclosure may be a humidifier.

The air-conditioning apparatus according to one or more embodiments of the present disclosure may include the components of the ventilator 3 in addition to the components of the air-conditioning apparatus 4.

A dedicated piece of hardware may entirely or partially implement the functional components of each of the control device 2 (see FIG. 7), the operation terminal 5 (see FIG. 7), the control device 2A (see FIG. 18), the server 6 (see FIG. 22), or the operation terminal 5A (see FIG. 22). Examples of the dedicated piece of hardware include a single circuit, a composite circuit, a programmed processor, an application specific integrated circuit (ASIC), a field-programmable gate array (FPGA), and combinations of any two or more of these components.

The present disclosure is applicable to a system that ventilates a building other than a house.

The technical idea of each of the above embodiments and the modifications may be implemented alone or in combination as appropriate.

The foregoing describes some example embodiments for explanatory purposes. Although the foregoing discussion has presented specific embodiments, persons skilled in the art will recognize that changes may be made in form and detail without departing from the broader spirit and scope of the invention. Accordingly, the specification and drawings are to be regarded in an illustrative rather than a restrictive sense. This detailed description, therefore, is not to be taken in a limiting sense, and the scope of the invention is defined only by the included claims, along with the full range of equivalents to which such claims are entitled.

### Industrial Applicability

The present disclosure may be suitably applicable to a ventilation system that ventilates a building.

### Reference Signs List

1, 1A, 1B Ventilation system
2, 2A Control device
3 Ventilator
4 Air-conditioning apparatus
5, 5A Operation terminal
6 Server
7 Router
20, 52, 60 Communication interface
21, 53, 61 CPU
22, 54, 62 ROM
23, 55, 63 RAM
24, 56, 64 Auxiliary storage
25, 57, 65 Bus
40 Indoor unit
41 Outdoor unit
42 Remote controller
43 Refrigerant pipe
44 Communication line
50 Display
51 Operation receiver
200, 601 Setting information acquirer
201, 602 Air-conditioning information acquirer
202, 202A, 603 Ventilation controller
203, 604 Notification information generator
204, 605 Notification information transmitter
205 Air-conditioning controller
240 Setting information table
400, 410 Control circuit
401, 413 Heat exchanger
402,414 Fan
403, 416 Thermal sensor
404 Thermal image sensor
411 Compressor
412 Four-way valve
415 Expansion valve
500 Setting receiver
501, 501A Setting information transmitter
502, 502A Notification information acquirer
503 Notification information transmitter
504 Registration receiver
505 Registration information transmitter
600 Registration information acquirer
640 Customer DB

## Claims

1. A control device for controlling ventilation means for ventilating a building, the control device comprising:
ventilation control means for controlling the ventilation means to (i) operate at a first ventilation amount when no heating operation is performed by air-conditioning means for performing air conditioning of the building and (ii) operate at a second ventilation amount when a heating operation is performed by the air-conditioning means, the second ventilation amount being less than the first ventilation amount.

2. The control device according to claim 1, wherein
when a heating operation is performed by the air-conditioning means, the ventilation control means controls the ventilation means to operate at the second ventilation amount during a limited period from when the heating operation is started to when an air temperature in the building reaches a set temperature.

3. The control device according to claim 1, wherein
when a heating operation is performed by the air-conditioning means, the ventilation control means controls the ventilation means to operate at the second ventilation amount only in a thermo-off state of the air-conditioning means.

4. The control device according to claim 1, wherein
when a heating operation is performed by the air-conditioning means, the ventilation control means controls the ventilation means to operate at the second ventilation amount only in a defrosting state of the air-conditioning means.

5. The control device according to any one of claims 1 to 4, wherein
the first ventilation amount is a ventilation amount corresponding to a required ventilation frequency being a prescribed minimum ventilation frequency, and the second ventilation amount is a ventilation amount acquired by subtracting a natural ventilation amount corresponding to a natural ventilation frequency from the first ventilation amount.

6. The control device according to claim 5, further comprising:
occupant count acquiring means for acquiring a count of occupants in a room in which the air-conditioning means is installed when a heating operation is performed by the air-conditioning means,
wherein when a required ventilation amount determined based on the acquired count of occupants is greater than the first ventilation amount, the ventilation control means controls the ventilation means to operate at a third ventilation amount that is a ventilation amount acquired by subtracting the natural ventilation amount from the required ventilation amount.

7. The control device according to claim 5 or 6, wherein
the ventilation control means estimates an index of airtightness inside the building based on a difference between an air pressure inside the building and an air pressure of outside air, and sets the natural ventilation frequency based on the estimated index.

8. The control device according to any one of claims 1 to 7, further comprising:
air-conditioning control means for controlling the air-conditioning means,
wherein the air-conditioning control means changes a set temperature of the air-conditioning means based on an air volume of the ventilation means.

9. The control device according to any one of claims 1 to 8, further comprising:
notification means for notifying information about an operation of the ventilation means to a user.

10. A control device for controlling ventilation means for ventilating a building, the control device being configured to control the ventilation means such that a ventilation amount of the ventilation means is a first ventilation amount when a temperature difference between an air temperature inside the building and an outside temperature is less than or equal to a predetermined threshold and to control the ventilation means such that the ventilation amount of the ventilation means is a second ventilation amount less than the first ventilation amount when the temperature difference is greater than the threshold.

11. A ventilation system, comprising:
the control device according to any one of claims 1 to 9;
the ventilation means; and
the air-conditioning means.

12. An air-conditioning apparatus, comprising:
the control device according to any one of claims 1 to 9;
the ventilation means; and
the air-conditioning means.

13. A ventilation control method, comprising:
controlling ventilation means for ventilating a building to (i) operate at a first ventilation amount when no heating operation is performed by air-conditioning means for performing air conditioning of the building and (ii) operate at a second ventilation amount when a heating operation is performed by the air-conditioning means, the second ventilation amount being less than the first ventilation amount.

14. A program for causing a computer to function as
ventilation control means for controlling ventilation means for ventilating a building to (i) operate at a first ventilation amount when no heating operation is performed by air-conditioning means for performing air conditioning of the building and (ii) operate at a second ventilation amount when a heating operation is performed by the air-conditioning means, the second ventilation amount being less than the first ventilation amount.
